# EUROPÄISCHE PATENTANMELDUNG

(11) **EP 1 765 027 A2**
(43) Veröffentlichungstag der Anmeldung: **21.03.2007**
(21) Anmeldenummer: 06019009.7
(22) Anmeldetag: 11.09.2006
(51) Int. Cl.: H04Q 7/36

(54) **Funksystem und Primärempfänger für ein solches Funksystem**

(30) Priorität: 16.09.2005 DE 102005044414
(71) Anmelder: Prof. Dr. Horst Ziegler und Partner GbR, 33100 Paderborn (DE)
(72) Erfinder: Ziegler, Horst, Prof. Dr., 33100 Paderborn (DE)
(74) Vertreter: Tiesmeyer, Johannes

(57) **Zusammenfassung**

Die Erfindung betrifft ein Funksystem mit Funksender-Endgeräten (E1, E2), die dazu eingerichtet sind, Funktelegramme in einem ersten Funkmodus (Δf₁) zu senden, wobei das Funksystem wenigstens einen Primärempfänger (P1, P2) aufweist, der einer Gruppe von Funksender-Endgeräten (E1, E2) zugeordnet und dazu eingerichtet ist, Funktelegramme von den Funksender-Endgeräten (E1, E2) zu empfangen, wobei der Primärempfänger (P1, P2) ferner dazu eingerichtet ist, Funktelegramme an wenigstens eine weitere Funknetzkomponente (P2, P1, M) zu senden und Funktelegramme von der weiteren Funknetzkomponente zu empfangen, wobei der Primärempfänger (P1, P2) und die weitere Funknetzkomponente (P2, P1, M) dazu eingerichtet sind, in einem zweiten Funkmodus (Δf₂) miteinander zu kommunizieren, wobei sich der zweite Funkmodus vom ersten Funkmodus im Übertragungsfrequenzbereich oder/und in der Modulationsart oder/und in der Datenübertragungsrate des Funkübertragungssignals unterscheidet.

## Beschreibung

Die Erfindung betrifft ein Funksystem mit Funksender-Endgeräten, die dazu eingerichtet sind, Funktelegramme in einem ersten Funkmodus zu senden, und wenigstens einem Primärempfänger, der einer Gruppe von Funksender-Endgeräten zugeordnet und dazu eingerichtet ist, Funktelegramme von den Funksender-Endgeräten zu empfangen, wobei der Primärempfänger ferner dazu eingerichtet ist, Funktelegramme an wenigstens eine weitere Funknetzkomponente zu senden und Funktelegramme von der weiteren Funknetzkomponente zu empfangen.

Funksysteme der hier betrachteten Art kommen z.B. im Gebäudeverwaltungsbereich zum Einsatz, etwa bei der Verbrauchsdatenerfassung betreffend den Heizmittelverbrauch, Wasserverbrauch, Gasverbrauch oder Stromverbrauch in einer Wohnung oder sonstigen Gebäudenutzungseinheit. Derartige Funksysteme und damit ausgestattete Verbrauchsdaten-Erfassungssysteme sind z.B. aus der EP 1 028 403 A2, der EP 1 037 185 A2 oder der EP 1 392 078 A2 bekannt. Bei solchen Verbrauchsdaten-Erfassungssystemen sind in den betreffenden Nutzungseinheiten eines Gebäudes vorgesehene Verbrauchszähler mit Funksendern ausgestattet, die Zählerstandsdaten und Kennungsinformationen zur Verbrauchszähler-Identifizierung zu bestimmten bzw. pseudostochastisch eingerichteten Sendezeitintervallen senden. Diesen Funksender-Endgeräten sind Primärempfänger zugeordnet, welche die Funktelegramme empfangen und daraus abgeleitete Daten ggf. über weitere Stationen an eine Abrechnungszentrale senden. Bei den Funksender-Endgeräten handelt es sich häufig um batteriebetriebene Geräte mit unidirektionalem Funkbetrieb und somit ohne Funkempfangsfunktion.

Insbesondere in größeren Gebäuden reicht ein Primärempfänger für den Datenempfang von sämtlichen Funksender-Endgeräten in dem Gebäude häufig nicht aus, insbesondere aus Gründen der Funkreichweite. In einem solchen Fall ist es üblich, mehrere Primärempfänger vorzusehen, denen die Funksender-Endgeräte gruppenweise zugeordnet sind. Auf diese Weise ist sicherzustellen, dass sämtliche Verbrauchszählerdaten von den Primärempfängern erfasst werden. Die Funkkommunikation zwischen den Funksender-Endgeräten und den Primärempfängern wird auch als primäre Funkkommunikation bezeichnet. Es sind auch Funksysteme der hier betrachteten Art bekannt, bei denen die Primärempfänger auch untereinander oder mit anderen funktechnischen Komponenten kommunizieren können, so dass sie ein statisches oder ggf. dynamisches Funknetz bilden können, in dem dann sekundäre Funkkommunikation stattfindet. Eine Master-Station in einem solchen Funknetz kann dann als Datensammelzentrale genutzt werden, welche die Daten z.B. über einen Telefonanschluss mit Modem zu einer entfernten Abrechnungszentrale weiterleitet.

In mehrstöckigen Wohngebäuden wird häufig ein Primärempfänger pro Stockwerk vorgesehen, der z.B. im Treppenhaus installiert ist. In der EP 1 037 185 A2 ist ein Funknetz mit mehreren Primärempfängern und einer Vielzahl von Funksender-Endgeräten beschrieben. Charakteristisch für ein solches konventionelles Funknetz ist, dass der Gebäudefunk in einem geeigneten und durch die europäische Frequenznutzungsrichtlinie ERC/REC-70-03 für solche "Short Range Devices (SRD)" zugelassenen Frequenzband erfolgt, weil ein solches Frequenzband von jedermann ohne Gebührenzahlungspflicht genutzt werden kann.

Es gibt verschiedene solcher Frequenzbänder mit unterschiedlichen funktechnischen Parametern, wie etwa der maximalen Sendeleistung, der Modulationsart, der zulässigen Kanalbelegungsdauer pro Zeiteinheit (Duty Cycle) usw.

Ferner gibt es Frequenzbänder, die nur mit gesonderter Genehmigung und gegen einmalige oder laufende Gebühren genutzt werden können, die aber hinsichtlich Funkreichweite, Kanalbelegung und Störungsfreiheit den oben angesprochenen gebührenfreien Frequenzbändern für SRD-Funk überlegen sind. Diese Frequenzbänder können in lokalen Funknetzen (wie beim Bündelfunk oder bei TETRA-Systemen) oder in globalen Netzen, wie etwa bei GSM- oder UMTS-Mobilfunksystemen genutzt werden.

Bei den bisher bekannten Funksystemen der hier betrachteten Art wurde aus Kostengründen üblicherweise ein für die jeweilige Anwendung optimales "Jedermann"-Frequenzband nach ERC/REC-70-03, also ein gebührenfreies Frequenzband für SRD-Funk ausgewählt, wobei sämtliche Komponenten des Funksystems in diesem Frequenzband oder einem Sub-Kanal daraus arbeiten. Bei diesem bekannten Lösungsansatz, der sich auch im europäischen Normentwurf prEN 13757-4 wiederfindet, hat man den Vorteil, dass die Primärempfänger für die unidirektional sendenden Endgeräte in ihrem Frequenzband auch Funksignale funktechnisch benachbarter Primärempfänger empfangen können.

Bei der Auswahl des optimalen Frequenzbandes hat man jedoch divergierende Optimierungskriterien für den Primärfunk und für den Sekundärfunk zu beachten. So sind z.B. die Funksender-Endgeräte häufig batteriebetriebene Geräte, die auf Batterielebensdauern von 5 - 15 Jahren optimiert sind. Die verwendeten Batterien sind üblicherweise Lithium-Knopfzellen, die zwar die geforderte hohe Batterielebensdauer sicherstellen können, deren Spitzenstrom jedoch für einen leistungsfähigen Sender normalerweise nicht ausreicht und bei denen ein baugrößenmäßig begrenzter Pufferkondensator den geforderten Strom für den Sendebetrieb jeweils nur kurzzeitig bereitstellen kann, so dass nur kurze Funktelegramme gesendet werden können. Darüber hinaus sind die Funksender-Endgeräte üblicherweise mit preiswerten, aber relativ leistungsschwachen Mikroprozessoren ausgestattet, so dass komplexere funktechnische Verfahren, wie etwa Spread-Spektrum-Techniken, nicht genutzt werden können. Hinzu kommt, dass bei den Funksender-Endgeräten üblicherweise preiswerte Schwingquarze als Taktgeber für die Sendefrequenz verwendet werden, wobei diese Schwingquarze aufgrund von Fertigungstoleranzen und insbesondere aufgrund ihrer ausgeprägten Temperaturabhängigkeit der Schwingungsfrequenz häufig Abweichungen von ihrer Nennfrequenz aufweisen. Dies gilt insbesondere für Schwingquarze, die als frequenzbestimmendes Element in Funksendern von Heizkostenverteilern bzw. Wärmemengenzählern schwankenden und teilweise hohen Temperaturen ausgesetzt sind. Die Sendefrequenz eines solchen Funksender-Endgerätes kann somit im Rahmen eines Toleranzbandes variieren, wobei dieses Toleranzband nicht außerhalb der zulässigen Frequenzbandbreite des Sendebetriebs liegen sollte. Unter Berücksichtigung der vorstehend genannten Umstände wird für den Primärfunk daher üblicherweise ein Frequenzband gewählt, in dem sich kurze Funktelegramme mit hoher Frequenztoleranz kostengünstig und funktechnisch zumindest akzeptabel realisieren lassen. Eine Funkreichweite vom Anbringungsort eines Verbrauchszählers innerhalb einer Wohnung bis zum Primärempfänger im Treppenhaus ist dabei in der Regel ausreichend.

Andere Bedingungen sind jedoch bei der Sekundärfunkkommunikation von Primärempfängern untereinander oder mit weiteren Funkkomponenten gegeben. Ein Primärempfänger soll üblicherweise Funktelegramme von einer größeren Anzahl an Funksender-Endgeräten empfangen können, so dass es wirtschaftlich sinnvoll sein kann, die Funksender-Endgeräte einerseits besonders preisgünstig zu realisieren und die Primärempfänger und sonstigen Sekundärfunknetzkomponenten den höheren Anforderungen entsprechend aufwendiger und teurer zu gestalten, etwa indem sie mit effektiveren Funkantennen, leistungsfähigeren Batterien und leistungsfähigen Mikroprozessoren ausgestattet werden. Sofern am Installationsort verfügbar, kann auch ein Netzanschluss für die Stromversorgung der Primärempfänger in Frage kommen. Wünschenswert wäre auch eine größere Funkreichweite der Primärempfänger, die ggf. sogar bis in Nachbargebäude des Installationsortes reichen sollte, so dass ein einzelner Telefonanschluss mit Modem für die Verbindung zur Abrechnungszentrale genutzt werden kann, um die Daten möglichst vieler Primärempfänger an die Abrechnungszentrale weiterzuleiten. Ein Problem dieser Lösung ist allerdings die sich ergebende hohe Kanalbelegung des (gemeinsamen) Funkkanals mit der Gefahr der Funkkollision zwischen den relativ häufigen Telegrammen der zahlreichen sendenden Endgeräte des Primärfunks und den Funktelegrammen des Sekundärfunks, also der Primärempfänger und der weiteren Funknetzkomponenten, die für einen sicheren Funknetzbetrieb auf einen möglichst störungsfreien Funkkanal angewiesen sind. Zur Belegungsdichte des Funkkanals ist noch anzumerken, dass die unidirektionalen Funksender-Endgeräte ein Funktelegramm in regelmäßigen Zeitabständen oder quasistochastischen Zeitabständen mehrfach senden.

Aufgabe der Erfindung ist es, ein Funksystem der eingangs genannten Art bereitzustellen, welches einen zuverlässigen Funkbetrieb in einem erweiterten Funkbereich ermöglicht und dennoch wirtschaftlich günstig zu betreiben ist.

Zur Lösung dieser Aufgabe wird bei einem Funksystem mit den eingangs genannten Merkmalen erfindungsgemäß vorgeschlagen, dass der Primärempfänger und die weitere Funknetzkomponente dazu eingerichtet sind, in einem zweiten Funkmodus miteinander zu kommunizieren, wobei sich der zweite Funkmodus vom ersten Funkmodus im Übertragungsfrequenzbereich oder/und in der Modulationsart oder/und in der Datenübertragungsrate des Funkübertragungssignals unterscheidet.

Bei dem Funksystem nach der Erfindung können die aus dem Stand der Technik bekannten preisgünstigen Funksender-Endgeräte verwendet werden, etwa um Verbrauchsdaten von Verbrauchszählern zu senden. Vorzugsweise handelt es sich bei den Funksender-Endgeräten um batteriebetriebene unidirektionale Geräte, die ihre Funktelegramme zu unterschiedlichen pseudostochastischen Zeitpunkten senden. Der einer Gruppe von Funksender-Endgeräten zugewiesene Primärempfänger ist vorzugsweise so programmiert, dass er die Soll-Sendezeitpunkte "kennt" oder z.B. aus Zeitpunkten vorausgegangener Funktelegramme und darin übertragener Gerätekennnummern ermitteln kann. Ein Beispiel für ein solches Verfahren zur Definition von pseudostochastischen Soll-Sendezeitpunkten von Funksender-Endgeräten ist in der EP 1 392 078 A2 erläutert.

Aufgrund der relativen Zeitungenauigkeiten der Zeitgeber der Funksender-Endgeräte und der Zeitgeber der Primärempfänger sind die zu erwartenden Empfangszeitpunkte nicht exakt genau bestimmbar. Dem kann dadurch begegnet werden, dass der Primärempfänger jeweils für ein Zeitintervall in Empfangsbereitschaft geschaltet wird, welches den erwarteten Empfangszeitpunkt enthält und entsprechend der erforderlichen Zeittoleranz vor diesem Zeitpunkt beginnt und erst nach Empfang des erwarteten Funktelegramms jeweils endet. In der EP 1 028 403 A2 ist ein Verfahren zur Einstellung optimierter Empfangsbereitschafts-Zeitintervalle erläutert.

Der einer Gruppe von Funksender-Endgeräten zugeordnete Primärempfänger ist so gesteuert, dass er jeweils während der Empfangsbereitschafts-Zeitintervalle für den Empfang von Funktelegrammen von den Funksender-Endgeräten in dem ersten Funkmodus geschaltet ist. Während der übrigen Zeit kann er zur Funkkommunikation im zweiten Funkmodus eingestellt sein.

Vorzugsweise unterscheidet sich der zweite Funkmodus vom ersten Funkmodus im Übertragungsfrequenzbereich des Funkübertragungssignals, so dass der Primärempfänger beim Wechsel vom ersten Funkmodus in den zweiten Funkmodus seinen Empfangsfrequenzkanal ändert. So kann z.B. die Funkkommunikation im ersten Funkmodus zwischen Funksender-Endgeräten und Primärempfänger (Primärfunk) unter Nutzung des e-Bandes (433.05 MHz - 434.79 MHz), des f-Bandes (868 MHz - 868,6 MHz) oder des g-Frequenzbandes (868,7 MHz - 869.2 MHz) gemäß der europäischen Frequenznutzungsrichtlinie ERC/REC-70-03 erfolgen. Die recht große Bandbreite dieser häufig genutzten Frequenzbänder erlaubt die Übertragung kurzer Funktelegramme hoher Datenübertragungsrate und mit einer relativ großen Toleranz der Funkübertragungsfrequenz. Es können daher weiterhin Funksender-Endgeräte mit preisgünstigen Massenquarzen als Zeittaktgeber bzw. Sendefrequenz-bestimmende Elemente verwendet werden. Die Begrenzung der Belegung des f-Frequenzbandes auf 1 % und des g-Frequenzbandes auf 0,1 % sichert einen zumindest stochastisch freien Funkkanal, wobei die geringe zulässige maximale Sendeleistung von 10 mW bzw. 25 mW sich auch mit den batteriebetriebenen Funksender-Endgeräten realisieren lässt.

Für die Funkkommunikation im zweiten Funkmodus mit weiteren Funknetzkomponenten (Sekundärfunk) wird vorgeschlagen, dass sich der Primärempfänger auf Funkbetrieb in dem sogenannten i-Frequenzband (869,4 MHz - 869,65 MHz) oder einem Frequenzband mit vergleichbaren Qualitätsmerkmalen einstellt. Qualitätsmerkmale des i-Frequenzbandes sind eine relativ hohe zugelassene Sendeleistung von 500 mW, eine große zugelassene Belegungsdichte (Duty-Cycle) von 10 % und insbesondere eine höhere Empfänger-Empfindlichkeit, die sich aus einer niedrigeren Datenübertragungsrate (Baud-Rate) und einer höheren Frequenzgenauigkeit ergibt, welche in diesem schmaleren Frequenzband große Funkreichweiten erlaubt. Damit ist es möglich, Primärempfänger mehrerer benachbarter Häuser oder gar ganzer Wohnviertel in einem einfachen Stern-Funknetz oder Baum-Funknetz einzubeziehen und grundstücksübergreifende Funkkommunikation zu betreiben.

Das für den zweiten Funkmodus vorgeschlagene Frequenzband ist jedoch für den unsynchronisierten Primärfunk zwischen Funksender-Endgeräten und Primärempfängern nicht geeignet. Die wesentlich geringere Bandbreite dieses Frequenzbandes erfordert langsamere Datenraten und insbesondere Schwingquarze mit größerer Frequenzstabilität als Sendefrequenz-bestimmende Elemente. Auch die hohe Sendeleistung kann mit den preiswerten kleinen Endgeräten nicht realisiert werden.

Innerhalb des von den Primärempfängern und ggf. weiteren Funkkomponenten gebildeten Funknetzes erfolgt die Funkkommunikation vorzugsweise synchronisiert, z.B. nach dem Verfahren der pseudostochastischen Zeitscheibenblöcke, wie es in der EP 0 900 480 B1 beschrieben ist, oder nach dem hierarchischem Funknetzverfahren, wie es in der EP 1037185 A2 beschrieben ist. Durch die Synchronisation sind auch die erforderlichen Empfangszeitfenster für die Funknetzkommunikation innerhalb des Funknetzes so kurz, dass auch im Sekundärfunk die Empfangszeitpunkte gut determinierbar sind. Dies macht es möglich, auch Primärempfänger mit Batterien als elektrische Energiequellen zu betreiben, da die Primärempfänger sowohl für den Primärempfang von den Funksender-Endgeräten als auch für den Sekundärempfang aus dem Funknetz nur für geringe Zeitabschnitte pro Zeiteinheit empfangsbereit geschaltet sein müssen.

Durch die erfindungsgemäße Verwendung unterschiedlicher Funkmodi für den Primärfunk zwischen Funksender-Endgeräten und Primärempfängern einerseits und dem Sekundärfunk zwischen Primärempfängern und weiteren Funknetzkomponenten andererseits lässt sich ein zuverlässiger Funkbetrieb in einem erweiteren Funkbereich wirtschaftlich günstig realisieren, insbesondere bei höherer Reichweite des Sekundärfunks im zweiten Funkmodus. Durch die Trennung des Funkkanals für den Primärfunk mit seiner hohen Kanalbelegung vom Funkkanal für den normalerweise synchronisierten und kollisionsarmen Sekundärfunk bidirektional betriebener Primärempfänger und ggf. sonstiger Funknetzkomponenten lässt sich eine insgesamt optimierte Systemdimensionierung erreichen.

Wie schon angesprochen, ist es bei einer bevorzugten Ausführungsform des Funksystems nach der Erfindung vorgesehen, dass die Funksender-Endgeräte ihre Funktelegramme unidirektional in bestimmten, insbesondere periodisch aufeinander folgenden oder pseudostochastisch eingerichteten Sendezeitintervallen senden, wobei der ihnen zugeordnete Primärempfänger so gesteuert ist, dass er in bestimmten Primär-Empfangszeitintervallen, die mit den Sendezeitintervallen der betreffenden Funksender-Endgeräte zusammenfallen sollen, im ersten Funkmodus empfangsbereit geschaltet ist, wohingegen er in Zeitbereichen außerhalb dieser Primär-Empfangszeitintervalle und ggf. außerhalb von bestimmten Funkempfangspausen zur Funkkommunikation im zweiten Funkmodus eingestellt ist.

In einer anderen Ausführungsform kann das Funksystem nach der Erfindung Funksender-Endgeräte umfassen, die bidirektional mit dem ihnen zugeordneten Primärempfänger kommunizieren können, wobei sie vorzugsweise dazu eingerichtet sind, ihre Funktelegramme auf Aufforderung durch den Primärempfänger zu senden.

Des Weiteren kann es vorgesehen sein, dass der bzw. die Primärempfänger oder/und weitere Funknetzkomponenten des Funksystems dazu eingerichtet sind, ein öffentliches Funknetz, insbesondere das GSM-Funknetz oder das UMTS-Funknetz für Funkkommunikation zu nutzen. Insbesondere bei der hohen Reichweite des Sekundärfunks lassen sich so die noch hohen festen und laufenden Kosten eines GSM-Modems bzw. UMTS-Modems auf ein großes Endgerätecluster umlegen und dementsprechend wirtschaftlich realisieren.

In besonders bevorzugter Ausgestaltung ist das Funksystem Teil eines Verbrauchsdatenerfassungssystems, wobei die Funksender-Endgeräte Messdaten der Messgeräte in Funktelegrammen an den betreffenden Primärempfänger zur Weiterleitung an eine Datensammelstation senden. Die Messgeräte sind Verbrauchsmessgeräte, insbesondere elektronische Heizkostenverteiler, Wärmemengenzähler, Wasserzähler, Gaszähler oder Stromzähler.

Gegenstand der Erfindung ist auch ein Primärempfänger für ein erfindungsgemäßes Funksystem, wobei der Primärempfänger dazu eingerichtet ist, Funktelegramme in einem ersten Funkmodus zu empfangen und Funktelegramme in einem zweiten Funkmodus zu senden und zu empfangen, wobei sich die Funkmodi im Übertragungsfrequenzbereich oder/und in der Modulationsart des zu empfangenden bzw. zu sendenden Funksignals oder/und in der Datenübertragungsrate unterscheiden.

Vorzugsweise ist der Primärempfänger im ersten Funkmodus dazu eingerichtet, in einer bestimmten Modulationsart modulierte Funksignale im Frequenzbereich 868 MHz - 869,4 MHz zu empfangen und zu demodulieren, wohingegen er im zweiten Funkmodus dazu eingerichtet ist, Funktelegramme im Übertragungsfrequenzbereich 869.4 MHz - 869.65 MHz zu senden und zu empfangen.

Der Primärempfänger ist vorzugsweise so gesteuert, dass er nach einem definierten Zeitschema zu bestimmten Zeitintervallen im ersten Funkmodus ist, um Funktelegramme, die von betreffenden Sendern im ersten Funkmodus gesendet werden, zu empfangen.

Es sei darauf hingewiesen, dass das Funksystem nach der Erfindung mit Primärempfängern ausgestattet sein kann, welche für beide - oder ggf. weitere Funkmodi mit einer gemeinsamen Empfängerschaltung und nur einem Mikroprozessor auskommen. Es können diesbezüglich moderne Synthesizer-Empfänger-Halbleiterbausteine eingesetzt werden, welche hinsichtlich der Empfangsfrequenzbereiche umschaltbar sind und Frequenzwechselzeiten im Bereich von wenigen Millisekunden aufweisen. Mit dem Wechsel des Empfangsfrequenzkanals können auch die übrigen funktechnischen Parameter, wie Empfängerbandbreite, die Modulationsart oder die Datenrate auf die für die jeweilige Funktion (Primärfunk oder Sekundärfunk) optimalen Parameter gewechselt werden.

Es sei noch darauf hingewiesen, dass die Situation eintreten kann, dass ein Primärempfänger während des Wartens auf ein Funktelegramm im ersten Funkmodus von einem Funksender-Endgerät ein Sekundärfunktelegramm aus dem Funknetz verpasst. Dieser Situation kann dadurch Rechnung getragen werden, dass Sekundärfunktelegramme vom Sender zeitweilig regelmäßig ohne Aufforderung oder aber bei bidirektionalen Sendern nur bei Ausbleiben einer Quittierung automatisch wiederholt werden. Wegen der vorzugsweise stochastischen Sendezeiten der Funksender-Endgeräte ist ein nochmaliges Zusammentreffen von einem Primärfunktelegramm und einem wiederholt gesendeten Sekundärfunktelegramm unwahrscheinlich.

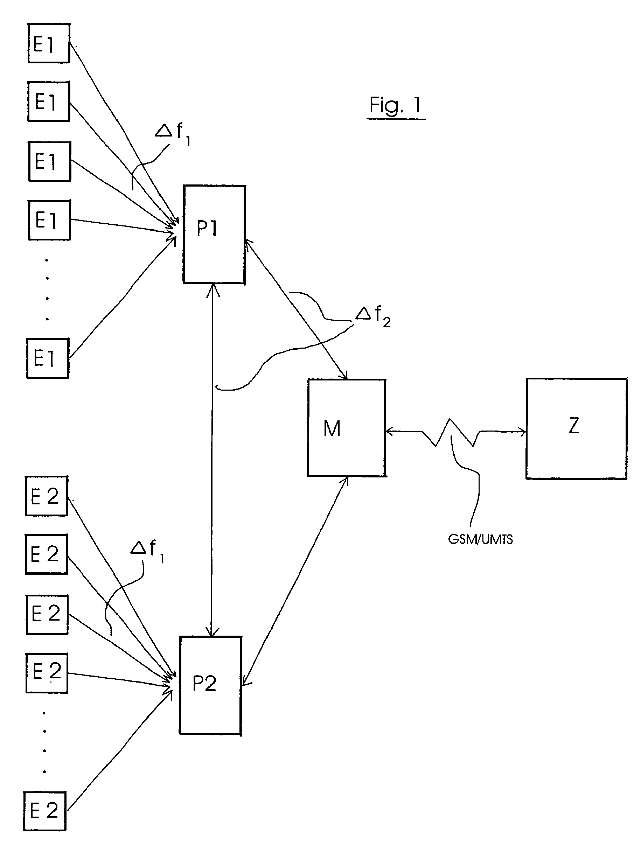

In der beigefügten Zeichnung (Fig. 1) ist schematisch ein Funksystem nach der Erfindung als Blockschaubild dargestellt.

Darin sind mit E1 Funksender-Endgeräte bezeichnet, die einem Primärempfänger P1 zugeordnet sind, wohingegen mit E2 Funkgeräte bezeichnet sind, die einem Primärempfänger P2 zugeordnet sind. Mit M ist eine Master-Funknetzkomponente bezeichnet, die mit den Primärempfängern P1, P2 ein Funknetz für Sekundärfunk bildet.

Die Funksender-Endgeräte E1 können z.B. Sendeeinrichtungen von Verbrauchszählern in einem ersten Stockwerk eines Gebäudes sein und einem in dem ersten Stockwerk im Treppenhaus installierten Primärempfänger P1 zugeordnet sein, um in bestimmten Zeitintervallen Funktelegramme mit Verbrauchsmessdaten und Zählerkennungsinformationen an den Primärempfänger P1 zu senden.

In entsprechender Weise kann es sich bei den Funksender-Endgeräten E2 um Sendeeinrichtungen von Verbrauchszählern in einem zweiten Stockwerk des Gebäudes handeln, wobei diese Funksender-Endgeräte E2 einem Primärempfänger P2 zugeordnet sind, der z.B. im zweiten Stock im Treppenhaus installiert ist. Der zweite Primärempfänger empfängt von den Funksender-Endgeräten E2 Funktelegramme mit Verbrauchsmessdaten und Zählerkennungsinformationen.

Die Funksender-Endgeräte E1, E2 sind unidirektionale Funkkomponenten ohne Empfangsfunktion. Die Primärempfänger P1 und P2 sind so programmiert, dass sie die Funksendezeitintervalle der ihnen zugeordneten Funksender-Endgeräte E1 bzw. E2 kennen bzw. aus vorausgegangenen Funkbotschaften nach einem bestimmten Algorithmus berechnen können. Die Primärempfänger P1, P2 sind so gesteuert, dass sie während der Sendezeitintervalle der ihnen zugeordneten Funksender-Endgeräte E1 bzw. E2 empfangsbereit geschaltet sind. Wegen der relativen Zeitunsicherheiten der Funksender-Endgeräte E1 bzw. E2 und der Primärempfänger P1 bzw. P2 aufgrund verschieden genau gehender Zeittaktgeber sind die jeweiligen Empfangsbereitschaftszeitintervalle der Primärempfänger P1 und P2 für den Empfang der Funktelegramme von den Funksender-Endgeräten E1 bzw. E2 so dimensioniert, dass sie etwas länger sind als die Sendezeitintervalle der Funksender-Endgeräte E1 bzw. E2. Die Funkkommunikation zwischen den Funksender-Endgeräten E1 bzw. E2 und den Primärempfängern P1 bzw. P2 erfolgt in einem ersten Funkmodus, welcher durch ein erstes Frequenzband Δf₁ gekennzeichnet ist, z.B. durch das g-Frequenzband (868,7 - 869,2 MHz) oder das f-Frequenzband (868.0 MHz - 868.6 MHz). In diesem Frequenzband können kurze Funktelegramme mit vergleichsweise großer Frequenztoleranz kostengünstig und funktechnisch akzeptabel übermittelt werden.

Die Primärempfänger P1 und P2 können miteinander und mit einer Master-Funknetzkomponente M bidirektionale Funkkommunikation betreiben. Dies erfolgt in einem zweiten Funkmodus, der durch ein zweites Frequenzband Δf₂ gekennzeichnet ist. Hierbei handelt es sich z.B. um das i-Frequenzband (869.4 MHz - 869.65 MHz). In diesem Frequenzband ist eine wesentlich höhere Sendeleistung zugelassen, als in dem g-Frequenzband oder dem f-Frequenzband. Auch ist die zugelassene Funkbelegung (Duty-Cycle) bei dem i-Frequenzband größer als bei dem g-Frequenzband bzw. dem f-Frequenzband. Das i-Frequenzband erlaubt ferner erheblich größere Funkreichweiten als das f-Frequenzband.

Wegen der höheren Frequenzgenauigkeit des i-Frequenzbandes ist es normalerweise erforderlich, die Primärempfänger P1, P2 mit frequenzgenaueren Zeittaktgebern (Schwingquarzen) auszustatten. Die Primärempfänger können zwischen dem ersten Funkmodus (f-Band) und dem zweiten Funkmodus (i-Band) umschalten. Vorzugsweise hat der erste Funkmodus während der Sendezeitintervalle der Funksender-Endgeräte Priorität. Außerhalb der mit den Funksendezeiten der Funksender-Endgeräte E1, E2 korrespondierenden Empfangsbereitschaftszeitintervalle im ersten Funkmodus können die Primärempfänger P1, P2 im zweiten Funkmodus in dem Funknetz aus Primärempfängern P1, P2 und Master-Komponenten M kommunizieren, etwa um Verbrauchsmessdaten an die Master-Komponente M weiterzugeben und/oder an der Netzsynchronisation teilzunehmen.

Es sei darauf hingewiesen, dass in einer praktischen Ausführungsform des Funksystems nach der Erfindung erheblich mehr Funksender-Endgeräte und Primärempfänger sowie weitere Funkkomponenten vorhanden sein können, als dies in Fig. 1 angedeutet ist. Dabei kann sich der Sekundärfunk im zweiten Funkmodus über größere Entfernungen ausbreiten, so dass eine große Anzahl von Funksender-Endgeräten erfasst und deren Verbrauchsdaten einer Datensammelstation M zugeführt werden können.

Ganz allgemein wird für eine besonders bevorzugte Variante der Erfindung vorgeschlagen, dass der zweite Funkmodus durch schmalbandigere Funkübertragung mit größerer Reichweite gekennzeichnet ist, als dies beim ersten Funkmodus der Fall ist.

Wie in Figur 1 angedeutet, besteht die Möglichkeit der Funkkommunikation der Master-Funkkomponente mit einer Abrechnungszentrale Z über ein Mobilfunknetz, z.B. das GSM-Netz oder das UMTS-Netz. In der Abrechnungszentrale laufen dann die Verbrauchsdaten in Zuordnung zu den Kennungsinformationen der Verbrauchszähler zusammen.

Die Erfindung beschränkt sich in der Anwendung nicht auf die Verbrauchsdatenerfassung im Gebäudeverwaltungsbereich. Ein weiteres ebenfalls nicht beschränkendes Anwendungsbeispiel ist der Einsatz des Funksystems nach der Erfindung in einem Gebäudeüberwachungssystem mit funkenden Alarmgebern.

## Patentansprüche

1. Funksystem mit
Funksender-Endgeräten (E1, E2), die dazu eingerichtet sind, Funktelegramme in einem ersten Funkmodus (Δf₁) zu senden,
wenigstens einem Primärempfänger (P1, P2), der einer Gruppe von Funksender-Endgeräten (E1 bzw. E2) zugeordnet und dazu eingerichtet ist, Funktelegramme von den Funksender-Endgeräten zu empfangen, wobei der Primärempfänger (P1, P2) ferner dazu eingerichtet ist, Funktelegramme an wenigstens eine weitere Funknetzkomponente (P2, P1, M) zu senden und Funktelegramme von der weiteren Funknetzkomponente zu empfangen,
**dadurch gekennzeichnet, dass** der Primärempfänger (P1, P2) und die weitere Funknetzkomponente (P2, P1, M) dazu eingerichtet sind, in einem zweiten Funkmodus (Δf₂) miteinander zu kommunizieren, wobei sich der zweite Funkmodus (Δf₂) vom ersten Funkmodus (Δf1) im Übertragungsfrequenzbereich oder/und in der Modulationsart oder/und in der Datenübertragungsrate des Funkübertragungssignals unterscheidet.

2. Funksystem nach Anspruch 1, **dadurch gekennzeichnet, dass** die weitere Funknetzkomponente ein Primärempfänger (P2, P1) ist, dem eine Gruppe von Funksender-Endgeräten (E2, E1) zur Funkkommunikation zu geordnet ist.

3. Funksystem nach Anspruch 1 oder 2, **dadurch gekennzeichnet, dass** weitere Funknetzkomponenten vorgesehen sind, die über ein gemeinsames Funknetz im zweiten Funkmodus miteinander kommunizieren können.

4. Funksystem nach einem der vorhergehenden Ansprüche, **dadurch gekennzeichnet, dass** die Funksender-Endgeräte Funkempfangsmittel aufweisen und bidirektional mit dem ihnen zugeordneten Primärempfänger kommunizieren können, wobei sie dazu eingerichtet sind, ihre Funktelegramme auf Aufforderung durch den Primärempfänger zu senden.

5. Funksystem nach einem der Ansprüche 1 bis 3, **dadurch gekennzeichnet, dass** die Funksender-Endgeräte (E1, E2) ihre Funktelegramme unidirektional in bestimmten, insbesondere periodisch aufeinander folgenden oder pseudostochastisch eingerichteten Sendezeitintervallen senden, und dass der ihnen zugeordnete Primärempfänger (P1, P2) so gesteuert ist, dass er in bestimmten Primär-Empfangszeitintervallen, die mit den Sendezeitintervallen der betreffenden Funksender-Endgeräte zusammenfallen sollen, im ersten Funkmodus empfangsbereit geschaltet ist, wohingegen er in Zeitbereichen außerhalb dieser Primär-Empfangszeitintervalle und ggf. außerhalb von bestimmten Funkempfangspausen zur Funkkommunikation im zweiten Funkmodus eingestellt ist.

6. Funksystem nach einem der vorhergehenden Ansprüche, **dadurch gekennzeichnet, dass** die Funksender-Endgeräte und der bzw. die Primärempfänger zur Funkkommunikation im ersten Funkmodus (Δf1) den Übertragungsfrequenzbereich 868 MHz - 869,4 MHz nutzen.

7. Funksystem nach einem der vorhergehenden Ansprüche, **dadurch gekennzeichnet, dass** der bzw. die Primärempfänger zur Funkkommunikation mit weiteren Funkgeräten im zweiten Funkmodus (Δf₂) den Übertragungsfrequenzbereich 869.4 MHz - 869.65 MHz nutzen.

8. Funksystem nach einem der vorhergehenden Ansprüche, **dadurch gekennzeichnet, dass** der bzw. die Primärempfänger oder/und weitere Funkkomponenten (M, Z) dazu eingerichtet sind, ein öffentliches Funknetz, insbesondere das GSM-Funknetz oder das UMTS-Funknetz für Funkkommunikation zu nutzen.

9. Funksystem nach einem der vorhergehenden Ansprüche, **dadurch gekennzeichnet, dass** die Funksender-Endgeräte (E1, E2) Elemente von Messgeräten sind, wobei sie dazu eingerichtet sind, Messdaten der Messgeräte in Funktelegrammen an den betreffenden Primärempfänger (P1, P2) zur Weiterleitung an eine Datensammelstation (M, Z) zu senden.

10. Funksystem nach Anspruch 9, **dadurch gekennzeichnet, dass** die Messgeräte Verbrauchsmessgeräte, insbesondere elektronische Heizkostenverteiler, Wasserzähler, Gaszähler, Wärmemengenzähler oder Stromzähler sind.

11. Primärempfänger (P1, P2) für ein Funksystem nach einem der vorhergehenden Ansprüche,
**dadurch gekennzeichnet, dass** er dazu eingerichtet ist, Funktelegramme in einem ersten Funkmodus (Δf₁) zu empfangen und Funktelegramme in einem zweiten Funkmodus (Δf₂) zu senden und zu empfangen, wobei sich die Funkmodi im Übertragungsfrequenzbereich oder/und in der Modulationsart des zu empfangenden bzw. zu sendenden Funksignals oder/und in der Datenübertragungsrate unterscheiden.

12. Primärempfänger nach Anspruch 11, **dadurch gekennzeichnet, dass** er im ersten Funkmodus (Δf₁) dazu eingerichtet ist, in einer bestimmten Modulationsart modulierte Funksignale im Frequenzbereich 868 MHz - 869,4 MHz zu empfangen und zu demodulieren, und dass er im zweiten Funkmodus (Δf₂) dazu eingerichtet ist, Funktelegramme im Übertragungsfrequenzbereich 869.4 MHz - 869.65 MHz zu senden und zu empfangen.

13. Primärempfänger nach Anspruch 11 oder 12, **dadurch gekennzeichnet, dass** er so gesteuert ist, dass er nach einem definierten Zeitschema zu bestimmten Zeitintervallen im ersten Funkmodus (Δf₁) ist, um Funktelegramme, die von betreffenden Sendern (E1, E2) im ersten Funkmodus gesendet werden, zu empfangen.
